# EUROPEAN PATENT APPLICATION

(11) **EP 4 606 698 A2**
(43) Date of publication of application: **27.08.2025**
(21) Application number: 25158788.7
(22) Date of filing: 19.02.2025
(51) Int. Cl.: B64C 1/14, B61D 35/00, B64D 11/02, E03D 11/00, E06B 3/48, E06B 7/28

(54) **EXPANDABLE LAVATORY FOR FULL-SIZE WHEELCHAIRS**

(30) Priority: 22.02.2024 US 202418584959
(71) Applicant: B/E Aerospace, Inc., Winston-Salem, NC 27105 (US)
(72) Inventor: MOE, Daniel N., Mukilteo, 98275 (US); JOHNSON, Glenn A., Rural Hall, 27045 (US)
(74) Representative: Dehns

(57) **Abstract**

An expandable lavatory for full-size wheelchairs may comprise an aircraft lavatory door system with a forward door (35) and an aft door (36) wherein both doors are capable of expanding into an expanded locked position. The expandable lavatory for full-size wheelchairs may comprise a first single lavatory (21), a second single lavatory (22), a collapsible divider (37), and a lavatory door system which functions to provide a door to each single lavatory and a door for a configuration in which the two single lavatories convert into one expanded double lavatory. The expandable lavatory for full-size wheelchairs may be a forward lavatory facing the aisle in proximity to a first galley, a second galley, and a wheelchair tie down space.

## Description

### FIELD

The present disclosure generally relates to lavatory systems and, more particularly, to lavatory door systems for aircraft lavatories.

### BACKGROUND

Aircraft lavatories may be difficult to access for passengers who use wheelchairs or other mobility devices. Space constraints in aircraft design tend to lead to designs that may not fully account for the needs of passengers who use wheelchairs or other mobility devices. The expandable lavatory for full-size wheelchairs would allow for greater convenience, comfort, and accessibility for passengers using wheelchairs, especially those who require assistance in transferring from the wheelchair. The expandable lavatory for full-size wheelchairs may also allow for compliance with aviation regulations.

### SUMMARY

Disclosed herein is a lavatory door system and an aircraft lavatory system. In various embodiments, the present disclosure provides for a lavatory door system, which may comprise a forward door. The forward door may further comprise a first side, a second side, a first forward door panel extending from the first side to the second side, a second forward door panel, a first forward door hinge located on the first side of the forward door, and a second forward door hinge located on the second side of the forward door. In various embodiments, the second forward door hinge may couple the first forward door panel to the second forward door panel. In various embodiments, the lavatory door system, may comprise an aft door. The aft door may further comprise a third side, a fourth side, a first aft door panel extending from the fourth side to the third side, a second aft door panel, a first aft door hinge located on the fourth side of the aft door, and a second aft door hinge located on the third side of the aft door. The second aft door hinge may couple the first aft door panel to the second aft door panel.

In various embodiments, the second forward door hinge may be configured to rotate the second forward door panel between a forward door closed position and a forward door expanded position. In the forward door closed position, the first forward door panel may be parallel to and may form an approximately 0° angle to the second forward door panel. In the forward door expanded position, the first forward door panel may form an obtuse angle with the second forward door panel.

In various embodiments, the second aft door hinge may be configured to rotate the first aft door panel from an aft door closed position and a forward door expanded position. In the aft door closed position, the first aft door panel may be parallel to and may form an approximately 0° angle to the second aft door panel. In the aft door expanded position, the first aft door panel may form an obtuse angle with the second aft door panel.

In various embodiments, in response to the forward door being in the forward door expanded position and in response to the aft door being in the aft door expanded position, the second forward door panel and the second aft door panel may meet at a seam.

In various embodiments, a length of the second forward door panel may be less than 50% of a length of the first forward door panel.

In various embodiments, a length of the second aft door panel may be greater than 50% of a length of the first aft door panel.

In various embodiments, a length of the second aft door panel may be greater than a length of the first aft door panel.

In various embodiments, in response to the forward door being in the forward door expanded position and in response to the aft door being in the aft door expanded position, the forward door and the aft door may operate together to open and close an expanded space.

In various embodiments, in response to the forward door being in the forward door closed position and in response to the aft door being in the aft door closed position, the forward door and the aft door may operate independently of each other such that the forward door may operate to open and close a forward space and the aft door may operate to open and close an aft space.

In various embodiments, the expanded space may be an expanded lavatory stall.

In various embodiments, the forward space may be a first single lavatory and the aft space may be a second single lavatory.

In various embodiments, the expanded space may have an area larger than a sum of the area of the forward space and the aft space.

In various embodiments, the lavatory door system of claim may further comprise a collapsible divider located between the forward space and the aft space.

In various embodiments, the present disclosure provides for an airplane lavatory. The airplane lavatory may comprise a forward space and an aft space. The airplane lavatory may also comprise a forward door. The forward door may further comprise a first side, a second side, a first forward door panel extending from the first side to the second side, a second forward door panel, a first forward door hinge located on the first side of the forward door, and a second forward door hinge located on the second side of the forward door. In various embodiments, the second forward door hinge may couple the first forward door panel to the second forward door panel. The airplane lavatory may also comprise an aft door. The aft door may further comprise a third side, a fourth side, a first aft door panel extending from the fourth side to the third side, a second aft door panel, a first aft door hinge located on the fourth side of the aft door, and a second aft door hinge located on the third side of the aft door. In various embodiments, the second aft door hinge may couple the first aft door panel to the second aft door panel.

In various embodiments, the second forward door hinge may be configured to rotate the second forward door panel between a forward door closed position and a forward door expanded position. In the forward door closed position, the first forward door panel may be parallel to and may form an approximately 0° angle to the second forward door panel. In the forward door expanded position, the first forward door panel may form an obtuse angle with the second forward door panel.

In various embodiments, the second aft door hinge may be configured to rotate the first aft door panel between an aft door closed position and an aft door expanded position. In the aft door closed position, the first aft door panel may be parallel to and may form an approximately 0° angle to the second aft door panel. In the aft door expanded position, the first aft door panel may form an obtuse angle with the second aft door panel.

In various embodiments, in response to the forward door being in the forward door expanded position and in response to the aft door being in the aft door expanded position, the second forward door panel and the second aft door panel may meet at a seam.

In various embodiments, the airplane lavatory may be configured to have an open position, a first closed position, and an expanded closed position.

In various embodiments, the airplane lavatory may further comprise a collapsible divider between the forward space and the aft space.

In various embodiments, in response to the airplane lavatory being in the first closed position, the forward space is a first single lavatory, the aft space is a second single lavatory, and the collapsible divider is configured to provide privacy between the first single lavatory and the second single lavatory. In various embodiments, in response to the airplane lavatory being in the expanded closed position, the collapsible divider is configured to collapse such that the forward space and the aft space are an expanded lavatory stall.

In various embodiments, the airplane lavatory may further comprise a first lock located on the forward door. In various embodiments, the airplane lavatory may further comprise a second lock located on the aft door. In various embodiments, in response to the forward door and the aft door being in the first closed position, the first lock may provide an occupancy indication for the first single lavatory and the second lock may provide an occupancy indication for the second single lavatory.

In various embodiments, the airplane lavatory may further comprise an overhang with a first receiver. In various embodiments, the airplane lavatory may further comprise a floor area with a second receiver. In various embodiments, in response to the forward door and the aft door being in the expanded closed position, the first receiver may receive a forward top of the forward door and an aft top of the aft door. In various embodiments, the second receiver may receive a forward bottom of the forward door and an aft bottom of the aft door.

In various embodiments, the airplane lavatory may further comprise a first sink and a first foot-rigging space located under the first sink. In various embodiments, the airplane lavatory may further comprise a second sink and a second foot-rigging space located under the second sink.

In various embodiments, the airplane lavatory may further comprise a curtain rod.

In various embodiments, the present disclosure provides for an aircraft. In various embodiments, the aircraft further comprises an aisle. In various embodiments, the aircraft further comprises a first galley located on a first side of the aisle. In various embodiments, the aircraft further comprises a second galley located on a second side of the aisle.

In various embodiments, the aircraft further comprises an expandable lavatory located aft of the first galley, aft of the second galley, and on the first side of the aisle.

In various embodiments, the aircraft further comprises an expandable lavatory located aft of a center boarding door.

In various embodiments, the aircraft further comprises a wheelchair tie down space located on the second side of the aisle. In various embodiments, a first door and a second door of the expandable lavatory open toward the aisle and toward the wheelchair tie down space.

In various embodiments, the expandable lavatory of the aircraft further comprises a forward door. The forward door may further comprise a first side, a second side, a first forward door panel extending from the first side to the second side, a second forward door panel, a first forward door hinge located on the first side of the forward door, and a second forward door hinge located on the second side of the forward door. In various embodiments, the second forward door hinge couples the first forward door panel to the second forward door panel.

In various embodiments, the expandable lavatory of the aircraft further comprises an aft door. The aft door may further comprise a third side, a fourth side, a first aft door panel extending from the fourth side to the third side, a second aft door panel, a first aft door hinge located on the fourth side of the aft door, and a second aft door hinge located on the third side of the aft door. In various embodiments, the second aft door hinge couples the first aft door panel to the second aft door panel.

In various embodiments, the second forward door hinge may be configured to rotate the second forward door panel between a forward door closed position and a forward door expanded position. In the forward door closed position, the first forward door panel may be parallel to and may form an approximately 0° angle to the second forward door panel. In the forward door expanded position, the first forward door panel may form an obtuse angle with the second forward door panel.

In various embodiments, the second aft door hinge may be configured to rotate the first aft door panel between an aft door closed position and an aft door expanded position. In the aft door closed position, the first aft door panel may be parallel to and may form an approximately 0° angle to the second aft door panel. In the aft door expanded position, the first aft door panel may form an obtuse angle with the second aft door panel.

In various embodiments, in response to the forward door being in the forward door expanded position and in response to the aft door being in the aft door expanded position, the second forward door panel and the second aft door panel may meet at a seam.

In various embodiments, the aircraft may further comprise a collapsible divider between the forward space and the aft space.

In various embodiments, the expandable lavatory of the aircraft is configured to have an open position, a first closed position, and an expanded closed position.

In various embodiments, in response to the expandable lavatory being in the first closed position, the collapsible divider is configured such that the forward space is a first single lavatory and the aft space is a second single lavatory.

In various embodiments, in response to the expandable lavatory being in the expanded closed position, the collapsible divider is configured to collapse such that the forward space and the aft space are an expanded lavatory stall.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft, in accordance with various embodiments.
FIG. 2 illustrates an expandable lavatory of an aircraft, in accordance with various embodiments.
FIG. 3A illustrates an aircraft floorplan with an expandable lavatory for full-size wheelchairs, in accordance with various embodiments.
FIG. 3B illustrates an aircraft floorplan with an expandable lavatory for full-size wheelchairs, in accordance with various embodiments.
FIG. 4A illustrates an expandable lavatory in a configuration providing for two single occupancy lavatories with two doors in a closed position, in accordance with various embodiments.
FIG. 4B illustrates an expandable lavatory in a configuration providing for two single occupancy lavatories with two doors in an open position, in accordance with various embodiments.
FIG. 5 illustrates an expandable lavatory in a configuration providing for an expanded lavatory stall with two doors in an expanded open position, in accordance with various embodiments.
FIG. 6A illustrates an expandable lavatory with a wheelchair and a curtain in a secured position, in accordance with various embodiments.
FIG. 6B illustrates an expandable lavatory in a configuration providing for an expanded lavatory stall with two doors in an expanded open position with a curtain in an open position, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made within the scope of the invention as defined by the claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a,'' "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

Disclosed herein is an expandable lavatory for full-size wheelchairs and a lavatory door system.

Also disclosed herein is an aircraft comprising a forward expandable lavatory for full-size wheelchairs. The expandable lavatory may be located in a forward position of the aircraft proximate the main boarding door.

In various embodiments, the expandable lavatory and the lavatory door system is beneficial for passengers traveling in wheelchairs. Passengers using wheelchairs on flights may be limited to less than preferable toilet usage scenarios on long flights such as forced dehydration, forced dehydration, adult diapers, and catheters. These options can lead to discomfort, strain, and injuries. Passengers may be required to use smaller wheelchairs provided by the airlines instead of their own wheelchair. Passengers may be required to transfer from their own wheelchair into a seat. Each passenger transfer process risks injury or damage to the passenger's wheelchair. The expandable lavatory, the lavatory door system, and the aircraft disclosed herein may allow for the passenger to use a full-size wheelchair and undergo fewer transfer processes. The expandable lavatory, the lavatory door system, and the aircraft disclosed herein may provide expanded space to facilitate a safer wheelchair transfer process in the lavatory. The expandable lavatory, the lavatory door system, and the aircraft disclosed herein may provide expanded space in the lavatory for more privacy in the transfer process.

Commercial aviation regulations require certain components of the aircraft to be present in order for the aircraft to take off on scheduled flights. The expandable lavatory, the lavatory door system, and the aircraft disclosed herein can be converted between two single stall lavatories and one expanded lavatory stall without adding or removing components of the lavatory. This is beneficial to retain all required components in a ready-for-flight configuration.

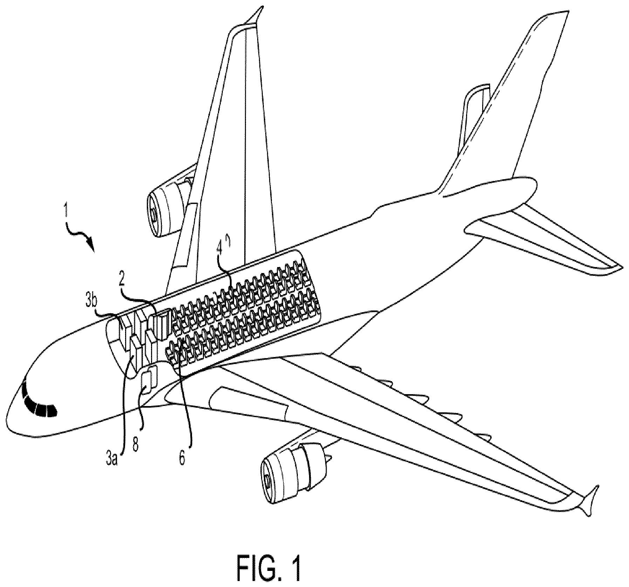

With reference to FIG. 1, an aircraft 1 is illustrated. Aircraft 1 may comprise an expandable lavatory 2. Aircraft 1 may comprise a first galley 3a. Aircraft 1 may comprise a second galley 3b. Aircraft 1 may comprise seats 4. Aircraft 1 may comprise an aisle 6. Aircraft 1 may comprise a main boarding door 8.

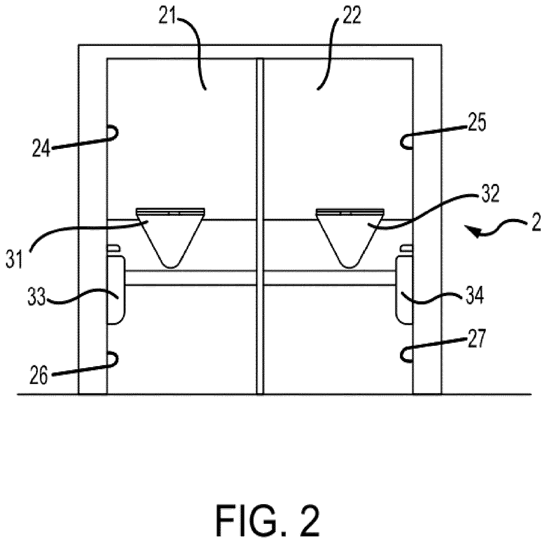

With reference to FIG. 2, a first single lavatory 21 and a second single lavatory 22 are illustrated. The first single lavatory 21 may comprise a first wall 24. The second single lavatory 22 may comprise a second wall 25. The first single lavatory 21 may comprise a first foot-rigging space 26. The second single lavatory 22 may comprise a second foot-rigging space 27. The first single lavatory 21 may comprise a first toilet 31. The second single lavatory 22 may comprise a second toilet 32. The first single lavatory 21 may comprise a first sink 33. The second single lavatory 22 may comprise a second sink 34.

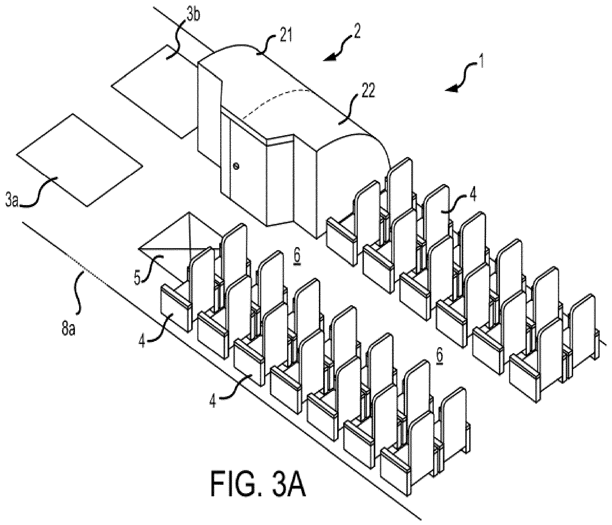

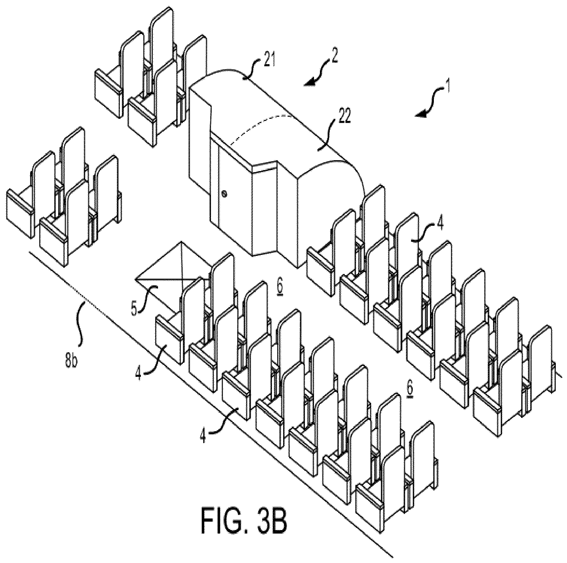

With reference to FIGs. 3A and 3B, an aircraft 1 comprising an expandable lavatory 2 is illustrated. The expandable lavatory 2 may be the lavatory nearest the main boarding door 8a. The expandable lavatory may be aft of a first galley 3a and aft of a second galley 3b. In other embodiments, the expandable lavatory 2 may be a forward lavatory, a rear lavatory, or a center lavatory. In other embodiments, the expandable lavatory 2 may be the lavatory nearest a center boarding door 8b, behind the wings, of an aircraft.

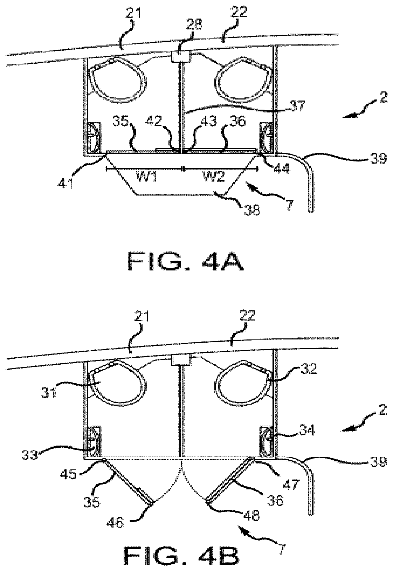

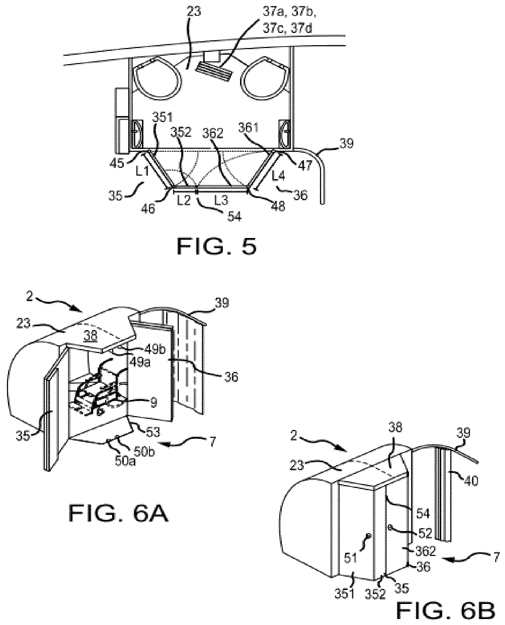

With initial reference to FIGs. 4A-6B, a lavatory door system 7 and an expandable lavatory 2 are illustrated. In various embodiments, the lavatory door system 7 may be configured to operate in a first configuration in which the expandable lavatory 2 provides for two single lavatory stalls (for example, a first single lavatory 21 and a second single lavatory 22). In the first configuration, the lavatory door system 7 may operate as two independent doors. In various embodiments, the lavatory door system 7 may be configured to operate in a second configuration in which the expandable lavatory 2 provides for one expanded lavatory stall 23. In the second configuration, the lavatory door system 7 may operate as one expanded door. The expandable lavatory 2 may comprise part or all of the lavatory door system 7. The expandable lavatory 2 may comprise part or all of the lavatory door system 7 may comprise a first single lavatory 21 and a second single lavatory 22.

With reference to FIG. 4A and in various embodiments, the lavatory door system 7 may comprise a forward door 35 and an aft door 36. The forward door 35 and the aft door 36 open toward an aisle 6 of the aircraft 1. The forward door 35 comprises a first side 41 and a second side 42. The forward door 35 may have a first width W1 measuring the distance between the first side 41 of the forward door 35 and the second side 42 of the forward door 35. The first side 41 of the forward door 35 is located farther from the aft door 36 than the second side 42 of the forward door 35.

With reference to FIG. 4A, the aft door 36 may have a third side 43 and a fourth side 44. The aft door 36 may have a second width W2 measuring the distance between the third side 43 of the aft door 36 and the fourth side 44 of the aft door 36. The third side 43 of the aft door 36 is located closer to the forward door 35 than the fourth side 44 of the aft door 36. In other words, if both the forward door 35 and the aft door 36 were in open positions, there would be an opening between the first side 41 of the forward door 35 and the fourth side 44 of the aft door 36 approximately the sum of the first width W1 and the second width W2.

With reference to FIGs. 4B and 5 and in various embodiments, the forward door 35 may be for a first single lavatory 21. In various embodiments, the forward door 35 may have a first forward door hinge 45 coupling the forward door 35 to the first single lavatory 21. The first forward door hinge 45 may be any means by which the forward door 35 is rotatably coupled to the first single lavatory 21. The first forward door hinge 45 may be located on the first side 41 of the forward door 35. The first forward door hinge 45 may function to rotate the forward door 35 between an open position and a first closed position. In various embodiments, the first forward door hinge 45 may be a piano hinge, a concealed hinge, a ball bearing hinge, a spring-loaded hinge, etc.

In various embodiments, the forward door 35 may have a second forward door hinge 46 coupling a first forward door panel 351 of the forward door 35 to a second forward door panel 352 of the forward door 35. The second forward door hinge 46 may be located on the second side 42 of the forward door 35. The second forward door hinge 46 may be any means by which the first forward door panel 351 is rotatably coupled to the second forward door panel 352. The second forward door hinge 46 may function to rotate the second forward door panel 352 between a collapsed position and an expanded position. In various embodiments, the second forward door hinge 46 may be a piano hinge, a concealed hinge, a ball bearing hinge, a spring-loaded hinge, etc.

In various embodiments, the aft door 36 may be for a second single lavatory 22. The aft door 36 may have a first aft door hinge 47 coupling the aft door 36 to the second single lavatory 22. The first aft door hinge 47 may be any means by which the aft door 36 is rotatably coupled to the second single lavatory 22. The first aft door hinge 47 may be located on the fourth side 44 of the aft door 36. The first aft door hinge 47 may function to rotate the aft door 36 between an open position and a first closed position. In various embodiments, the first aft door hinge 47 may be a piano hinge, a concealed hinge, a ball bearing hinge, a spring-loaded hinge, etc.

In various embodiments, the aft door 36 may have a second aft door hinge 48 coupling a first aft door panel 361 of the aft door 36 to a second aft door panel 362 of the aft door 36. The second aft door hinge 48 may be located on the third side 43 of the aft door 36. The second aft door hinge 48 may be any means by which the first aft door panel 361 is rotatably coupled to the second aft door panel 362. The second aft door hinge 48 may function to rotate the second aft door panel 362 between a collapsed position and an expanded position. In various embodiments, the second aft door hinge 48 may be a piano hinge, a concealed hinge, a ball bearing hinge, a spring-loaded hinge, etc.

With reference to FIG. 5 and in various embodiments, the first forward door panel 351 may have a first length L1. The second forward door panel 352 may have a second length L2. In various embodiments, the second length L2 is between 5% and 50% of the first length L1.

In various embodiments, the first aft door panel 361 may have a third length L3. The second aft door panel 362 may have a fourth length L4. In various embodiments, the fourth length L4 is between 50% and 150% of the third length L3.

With reference to FIGs. 4B and 6A and in various embodiments, the lavatory door system 7 may have an open position. In the open position, at least one of the forward door 35 or the aft door 36 is open.

With reference to FIG. 4A and in various embodiments, the lavatory door system 7 may have a first closed position. In the first closed position, the forward door 35 is closed to provide privacy for a first single lavatory 21 and the aft door 36 is closed to provide privacy for a second single lavatory 22. The lavatory door system 7 provides for the forward door 35 and the aft door 36 to operate independently when the expandable lavatory 2 is configured for a first single lavatory 21 and a second single lavatory 22. In other words, the forward door 35 may be open for the first single lavatory 21 while the aft door 36 is closed for the second single lavatory 22. In various embodiments, the aft door 36 may be open for the second single lavatory 22 while the forward door 35 is closed for the first single lavatory 21.

With reference to FIGs. 5 and 6B and in various embodiments, the lavatory door system 7 may have an expanded closed position. In the expanded closed position, the forward door 35 and the aft door 36 are expanded to provide a door for an expanded lavatory stall 23. In the expanded closed position, the first forward door hinge 45 and the second forward door hinge 46 open such that the first forward door panel 351 and the second forward door panel 352 form an obtuse angle at the second forward door hinge 46. In the expanded closed position, the first aft door hinge 47 and the second aft door hinge 48 open such that the first aft door panel 361 and the second aft door panel 362 form an obtuse angle at the second aft door hinge 48.

In various embodiments, in an expanded closed position, the second forward door panel 352 and the second aft door panel 362 meet at a seam 54 to form an enclosed door.

With reference to FIG. 6B and in various embodiments, the forward door 35 may have a first lock 51. In response to the forward door 35 being in a first closed position, the first lock 51 may provide an occupancy indication for the first single lavatory 21. In response to the forward door 35 being in an expanded closed position, the first lock 51 may provide an occupancy indication for the expanded lavatory stall 23.

In various embodiments, the aft door 36 may have a second lock 52. In response to the aft door 36 being in a first closed position, the second lock 52 may provide an occupancy indication for the second single lavatory 22. In response to the aft door 36 being in an expanded closed position, the second lock 52 may provide an occupancy indication for the expanded lavatory stall 23. In various embodiments, either the first lock 51 or the second lock 52, but not both, provide an occupancy indication for the expanded lavatory stall 23.

With reference to FIGs. 4A-5 and in various embodiments, the lavatory door system 7 comprises a collapsible divider 37. The collapsible divider 37 separates the expandable lavatory 2 into a first single lavatory 21 and a second single lavatory 22. The collapsible divider 37 may separate the expandable lavatory 2 such that the first single lavatory 21 and the second single lavatory 22 are spaces of equal area. The collapsible divider 37 may separate the expandable lavatory 2 such that the first single lavatory 21 is larger in area than the second single lavatory 22. The collapsible divider 37 may separate the expandable lavatory 2 such that the second single lavatory 22 is larger in area than the first single lavatory 21.

In various embodiments, the collapsible divider 37 comprises panels. For example, as illustrated in FIG. 5A, there may be four panels: panel 37a, panel 37b, panel 37c, and panel 37d. For example, there may be ten panels. There may be any number of panels 37n. The panels 37a-37n of the collapsible divider 37 may fold in an accordion-style to convert the expandable lavatory 2 from a first single lavatory 21 and a second single lavatory 22 to an expanded lavatory stall 23. In other embodiments, the collapsible divider 37 may fold in an origami style, or fold in any other style sufficient to maximize space for wheelchair positioning and assistance. The panels of the collapsible divider 37 fold to convert the expandable lavatory 2 from a first single lavatory 21 and a second single lavatory 22 to an expanded lavatory stall 23.

In various embodiments, the expanded lavatory stall 23 is configured to provide increased wheelchair maneuvering space. In various embodiments, the expanded lavatory stall 23 is configured to provide maximized wheelchair maneuvering space. In various embodiments, the expanded lavatory stall 23 is configured to optimize space for user transfer from a wheelchair to at least one of the first toilet 31 or the second toilet 32. In various embodiments, the expanded lavatory stall 23 is configured to provide standing room access for an assist person, caregiver, or crew member.

In various embodiments and with reference to FIGs. 4A-6B, an expandable lavatory 2 is illustrated. The expandable lavatory 2 may comprise some or all the components of the lavatory door system 7 described above. For example, the expandable lavatory 2 may comprise a forward door 35 and an aft door 36. For example, the expandable lavatory 2 may comprise at least one of a first forward door hinge 45, a second forward door hinge 46, a first aft door hinge 47, or a second aft door hinge 48. For example, the expandable lavatory 2 may comprise a collapsible divider 37. For example, the expandable lavatory 2 may comprise at least one of a first forward door panel 351, a second forward door panel 352, a first aft door panel 361, or a second aft door panel 362.

With reference to FIG. 2 and in various embodiments, the expandable lavatory 2 comprises a first sink 33. The first sink 33 may be located on a first wall 24 of the first single lavatory 21. The first sink 33 may be located above a first foot-rigging space 26 of the first wall 24. The first foot-rigging space 26 may be a portion of the first wall 24 without fixtures. In this manner, the first foot-rigging space 26 provides for the foot-riggings (ex: wheelchair footrests) of a wheelchair 9 to extend beneath the first sink 33. The first foot-rigging space 26 may allow for a wheelchair user's feet and knees to closely approach the first wall 24 in order for the wheelchair user to better access the first sink 33.

In various embodiments, the expandable lavatory 2 comprises a second sink 34. The second sink 34 may be located on a second wall 25 of the second single lavatory 22. The second sink 34 may be located above a second foot-rigging space 27 of the second wall 25. The second foot-rigging space 27 may be a portion of the second wall 25 without fixtures. In this manner, the second foot-rigging space 27 provides for the foot-riggings of a wheelchair 9 to extend beneath the second sink 34. The first foot-rigging space 27 may allow for a wheelchair user's feet and knees to closely approach the second wall 25 in order for the wheelchair user to better access the second sink 34.

With reference to FIGs. 2 and 4A and in various embodiments, the expandable lavatory 2 comprises a first toilet 31. The first toilet 31 may be located in the first single lavatory 21. In various embodiments, the first toilet 31 may be oriented toward the forward door 35. In various embodiments, the first toilet 31 may be oriented at an angle with respect to the first wall 24.

In various embodiments, the expandable lavatory 2 comprises a second toilet 32. The second toilet 32 may be located in the second single lavatory 22. In various embodiments, the second toilet 32 may be oriented toward the aft door 36. In various embodiments, the second toilet 32 may be oriented at an angle with respect to the second wall 25.

With reference to FIGs. 4A and 4B and in various embodiments, the expandable lavatory 2 may have a first configuration which provides for two single lavatory stalls (for example, a first single lavatory 21 and a second single lavatory 22). In the first configuration, collapsible divider 37 is extended to function as a wall diving the first single lavatory 21 from the second single lavatory 22. With reference to FIGs. 5 and 6A and in various embodiments, the expandable lavatory 2 may have a second configuration which provides for one expanded lavatory stall 23. In the second configuration, the collapsible divider 37 may be collapsed to remove the wall diving the first single lavatory 21 from the second single lavatory 22. In the second configuration, the collapsible divider 37 may be rotated toward either the first toilet 31 or the second toilet 32. In this manner, the collapsible divider 37 in a collapsed position may be rotated to provide space for a wheelchair 9 to fit within the expanded lavatory stall 23.

With reference to FIGs. 4A and in various embodiments, the collapsible divider 37 is coupled to a pedestal 28 located between the first toilet 31 and the second toilet 32. The pedestal 28 may be a fixed, non-movable structure. The pedestal 28 may be a support pedestal for the collapsible divider 37.

With reference to FIGs. 6A and 6B and in various embodiments, the expandable lavatory 2 may comprise an overhang 38. The overhang 38 may extend from the first side 41 of the forward door 35 to the fourth side 44 of the aft door 36. The overhang 38 may be located at the top of the forward door 35 and the aft door 36. The overhang 38 may be located above the forward door 35 and the aft door 36. The overhang 38 may extend from the expandable lavatory 2 into the aisle 6 of the aircraft 1. The overhang 38 may contain a first receiver 49. The first receiver 49 may be a rail system. The first receiver 49 may be a latch. The first receiver 49 may be a pair of latches 49a and 49b. The first receiver 49 may guide the first forward door panel 351 and second forward door panel 352 into an expanded closed position. The first receiver 49 may also guide the first aft door panel 361 and second aft door panel 362 into an expanded closed position. The first receiver 49 may lock the first forward door panel 351 and second forward door panel 352 into an expanded closed position. The first receiver 49 may also lock the first aft door panel 361 and second aft door panel 362 into an expanded closed position.

In various embodiments, the expandable lavatory 2 may comprise a floor area 53. The floor area 53 may extend from the first side 41 of the forward door 35 to the fourth side 44 of the aft door 36. The floor area 53 may be located at the bottom of the forward door 35 and the aft door 36. The floor area 53 may be located below the forward door 35 and the aft door 36. The floor area 53 may extend from the expandable lavatory 2 into the aisle 6 of the aircraft 1. The floor area 53 may contain a second receiver 50. The second receiver 50 may be a rail system. The second receiver 50 may be a latch. The second receiver 50 may be a pair of latches 50a and 50b. The second receiver 50 may guide the first forward door panel 351 and second forward door panel 352 into an expanded closed position. The second receiver 50 may also guide the first aft door panel 361 and second aft door panel 362 into an expanded closed position.

In various embodiments, the expandable lavatory 2 may comprise a curtain rod 39. The curtain rod 39 may comprise a curtain 40. In various embodiments, the curtain 40 may be disposed in a secured position such that the curtain does not obstruct the aisle 6. In various embodiments, the curtain 40 may be disposed in an open position such that the curtain provides a privacy barrier between the expandable lavatory 2 and at least a portion of the aisle 6.

In various embodiments and with reference to FIGs. 1-3, an aircraft 1 with an expandable lavatory 2 is illustrated. The expandable lavatory 2 may be a forward lavatory, a rear lavatory, or a center lavatory. The expandable lavatory 2 may be a forward lavatory nearest the main boarding door 8. The expandable lavatory 2 may be aft of a first galley 3a and a second galley 3b. The expandable lavatory may be proximate a wheelchair tie down space 5. The expandable lavatory 2 may be facing the wheelchair tie down space 5. In other words, the wheelchair tie down space 5 may be the distance of the width of the aisle 6 from at least one of the forward door 35 or the aft door 36 of the expandable lavatory 2. In this manner, an aircraft 1 with an expandable lavatory 2 may allow for a passenger to enter the aircraft 1, be secured into the wheelchair tie down space 5, and enter the expandable lavatory 2 in a full-size wheelchair 9 without having to undergo a transfer from the full-size wheelchair 9 into a smaller wheelchair 9 or into an aircraft passenger seat 4. In various embodiments, the wheelchair tie down space 5 is configured to maintain at least a minimum allowable aisle transition dimension according to U.S. Federal Aviation Administration regulations.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

## Claims

1. A lavatory door system, comprising:
a forward door (35) comprising:
a first side (41),
a second side (42),
a first forward door panel (351) extending from the first side to the second side,
a second forward door panel (352),
a first forward door hinge (45) located on the first side of the forward door, and a second forward door hinge (46) located on the second side of the forward door, wherein the second forward door hinge couples the first forward door panel to the second forward door panel; and
an aft door (36) comprising:
a third side (43),
a fourth side (44),
a first aft door panel (361) extending from the fourth side to the third side,
a second aft door panel (362),
a first aft door hinge (47) located on the fourth side of the aft door, and a second aft door hinge (48) located on the third side of the aft door, wherein the second aft door hinge couples the first aft door panel to the second aft door panel;
wherein the second forward door hinge is configured to rotate the second forward door panel between a forward door closed position in which the first forward door panel is parallel to and forms an approximately 0° angle to the second forward door panel and a forward door expanded position in which the first forward door panel forms an obtuse angle with the second forward door panel,
wherein the second aft door hinge is configured to rotate the first aft door panel between an aft door closed position in which the first aft door panel is parallel to and forms an approximately 0° angle to the second aft door panel and an aft door expanded position in which the first aft door panel forms an obtuse angle with the second aft door panel, and
wherein in response to the forward door being in the forward door expanded position and in response to the aft door being in the aft door expanded position, the second forward door panel and the second aft door panel meet at a seam.

2. The lavatory door system of claim 1, wherein a length of the second forward door panel (352) is less than 50% of a length of the first forward door panel (351) and/or wherein a length of the second aft door panel is greater than 50% of a length of the first aft door panel, and optionally wherein a length of the second aft door panel is greater than a length of the first aft door panel.

3. The lavatory door system of claim 1, wherein, in response to the forward door (35) being in the forward door expanded position and in response to the aft door (36) being in the aft door expanded position, the forward door and the aft door operate together to open and close an expanded space, and optionally wherein, in response to the forward door being in the forward door closed position and in response to the aft door being in the aft door closed position, the forward door and the aft door operate independently of each other such that the forward door operates to open and close a forward space and the aft door operates to open and close an aft space.

4. The lavatory door system of claim 3, and wherein the expanded space is an expanded lavatory stall.

5. The lavatory door system of claim 4, wherein the forward space is a first single lavatory (21) and the aft space is a second single lavatory (22), and optionally wherein the expanded space has an area larger than a sum of the area of the forward space and the aft space.

6. The lavatory door system of claim 3, further comprising a collapsible divider (37) located between the forward space and the aft space.

7. An airplane lavatory, comprising:
a forward space,
an aft space, and
a lavatory door system as claimed in any preceding claim.

8. The airplane lavatory of claim 7, wherein the airplane lavatory is configured to have an open position, a first closed position, and an expanded closed position.

9. The airplane lavatory of claim 8, further comprising a collapsible divider (37) between the forward space and the aft space;
wherein, in response to the airplane lavatory being in the first closed position, the forward space is a first single lavatory, the aft space is a second single lavatory, and the collapsible divider is configured to provide privacy between the first single lavatory and the second single lavatory; and
wherein, in response to the airplane lavatory being in the expanded closed position, the collapsible divider is configured to collapse such that the forward space and the aft space are an expanded lavatory stall.

10. The airplane lavatory of claim 9, further comprising:
a first lock (51) located on the forward door (35); and
a second lock (52) located on the aft door (36),
wherein, in response to the forward door and the aft door being in the first closed position, the first lock provides an occupancy indication for the first single lavatory and
the second lock provides an occupancy indication for the second single lavatory.

11. The airplane lavatory of claim 10, further comprising:
an overhang (38) with a first receiver (49); and
a floor area (53) with a second receiver (50),
wherein, in response to the forward door and the aft door being in the expanded closed position, the first receiver receives a forward top of the forward door and an aft top of the aft door and the second receiver receives a forward bottom of the forward door and an aft bottom of the aft door.

12. The airplane lavatory of any of claims 7 to 11, further comprising:
a first sink (33);
a first foot-rigging space (26) located under the first sink;
a second sink (34); and
a second foot-rigging space (27) located under the second sink.

13. The airplane lavatory of any of claims 7 to 12, further comprising a curtain rod (39).

14. An aircraft, comprising:
an aisle (6);
a first galley (3a) located on a first side of the aisle;
a second galley (3b) located on a second side of the aisle;
an expandable lavatory (2) located aft of the first galley, aft of the second galley, and on the first side of the aisle; and
a wheelchair tie down space (5) located on the second side of the aisle,
wherein a first door and a second door of the expandable lavatory open toward the aisle and toward the wheelchair tie down space.

15. The aircraft of claim 14, wherein the expandable lavatory further comprises:
a lavatory door system as claimed in any of claims 1 to 10; and optionally:
further comprising a collapsible divider (37) between the forward space and the aft space;
wherein the expandable lavatory is configured to have an open position, a first closed position, and an expanded closed position;
wherein, in response to the expandable lavatory being in the first closed position, the collapsible divider is configured such that the forward space is a first single lavatory and the aft space is a second single lavatory; and
wherein, in response to the expandable lavatory being in the expanded closed position, the collapsible divider is configured to collapse such that the forward space and the aft space are an expanded lavatory stall.
